# EUROPÄISCHE PATENTSCHRIFT

(11) **EP 3 046 204 B1**
(45) Veröffentlichungstag und Bekanntmachung des Hinweises auf die Patenterteilung: **29.04.2020**
(21) Anmeldenummer: 16151072.2
(22) Anmeldetag: 13.01.2016
(51) Int. Cl.: H02J 3/38, F03D 7/02, H02J 11/00, H01H 83/10

(54) **WINDENERGIEANLAGE**
WIND ENERGY SYSTEM
ÉOLIENNE

(30) Priorität: 16.01.2015 DE 102015000282
(43) Veröffentlichungstag der Anmeldung: 20.07.2016
(73) Patentinhaber: Senvion GmbH, 22297 Hamburg (DE)
(72) Erfinder: Letas, Heinz-Hermann, 24796 Bovenau (DE); Brandt-Zebothsen, Karsten, 24214 Altwittenbek (DE)
(74) Vertreter: Glawe, Delfs, Moll

(56) Entgegenhaltungen:
- EP-A1- 2 784 305
- EP-A2- 2 169 222
- EP-A2- 2 647 839
- EP-A2- 2 703 642
- JP-A- 2014 230 405

## Beschreibung

Die Erfindung betrifft eine Windenergieanlage mit elektrisch betriebenen Komponenten, einen Versorgungsstrang zur Versorgung elektrisch betriebener Komponenten, einen Windpark mit entsprechendem Versorgungsstrang, Verfahren zum Betrieb einer Windenergieanlage oder eines Windparks sowie ein Computerprogrammprodukt zur Durchführung des Verfahrens.

Windenergieanlagen sind aus dem Stand der Technik bekannt. Sie umfassen in der Regel einen Rotor, der drehbar an einer Gondel angeordnet ist, wobei die Gondel wiederum drehbar auf einem Turm angeordnet ist. Der Rotor treibt über eine Rotorwelle ein Getriebe an, welches auf seiner Abtriebsseite mit einem Generator verbunden ist. Es sind auch Windenergieanlagen bekannt, bei denen der Rotor direkt, d. h. ohne ein dazwischengeschaltetes Getriebe, mit dem Generator verbunden ist. Eine durch Wind induzierte Rotationsbewegung des Rotors kann so in elektrische Energie gewandelt werden, die dann über Umrichter und/oder Transformatoren - je nach Bauart des Generators auch wenigstens teilweise direkt - in ein elektrisches Netz eingespeist werden kann.

Neben den für die Erzeugung der Energie erforderlichen Hauptkomponenten umfassen Windenergieanlagen noch eine Vielzahl an Hilfs- und Nebenkomponenten, die für den ordnungsgemäßen Betrieb der Windenergieanlage erforderlich sind. Viele dieser Komponenten, wie bspw. elektronische Steuerungskomponenten, Heizungen, Verstellantriebe, müssen mit elektrischer Energie versorgt werden.

Im Stand der Technik ist es bekannt, dass die für den Betrieb der elektrischen Hilfs- und Nebenkomponenten erforderliche elektrische Energie unmittelbar aus dem Teil des Leistungskreises der Windenergieanlage, in dem Netzspannung herrscht, entnommen und über eine Eigenbedarfsregelung auf ein vorgegebenes Spannungslevel geregelt wird. Beispielsweise kann bei der Eigenbedarfsregelung eine Kombination aus Leistungsschützen und Transformatoren verwendet werden, um sich stufenweise an die Netzspannung anzupassen. Allerdings weist diese im Stand der Technik bekannte und übliche Eigenbedarfsregelung eine endliche Reaktionszeit auf, mit denen dynamische Spannungsänderungen in der Netzspannung nicht vollständig ausgeregelt werden können. Insbesondere bei einem plötzlichen Spannungsanstieg im Netz, bei dem die Windenergieanlage zumindest zeitweise weiter mit dem Netz verbunden bleibt ("over voltage ride through", OVRT), kann sich aufgrund der endlichen Reaktionszeit der Eigenbedarfsregelung die Spannung bei der Versorgung der elektrischen Hilfs- und Nebenkomponenten zumindest kurzzeitig erhöhen, was ggf. zu einer Überlastung der Komponenten führt und Beschädigungen hervorrufen kann.

Entsprechendes gilt auch für andere elektrisch betriebene Komponenten, bspw. diejenigen eines Windparks, die über einen Eigenbedarfsregler durch ein Netz, bspw. durch das windparkinterne Netz, mit elektrischer Energie versorgt werden, in dem grundsätzlich die Gefahr einer Überspannung besteht.

Um Beschädigungen durch entsprechende Überbelastungen zu vermeiden, ist es grundsätzlich möglich, die elektrisch betriebenen Komponenten derart zu überdimensionieren, dass kurzfristige Spannungserhöhungen beschädigungsfrei überstanden werden können. Dies erfordert jedoch höher dimensionierte und damit in der Regel kostenintensivere Komponenten.

Theoretisch wäre es auch möglich, über einen dynamischen Frequenzumrichter mit drehzahlgeregeltem Motor und damit verbundenem Generator eine vollständig von der Netzspannung entkoppelte Versorgungsspannung zu erzeugen. Diese Lösung ist jedoch sehr aufwendig, wartungs- und kostenintensiv.

EP 2 169 222 A2 offenbart eine Lösung, die in der Zuschaltung einer Drossel besteht.

Aufgabe der vorliegenden Erfindung ist es, eine Windenergieanlage mit elektrisch betriebenen Komponenten, einen Versorgungsstrang für elektrisch betriebene Komponenten, einen Windpark, ein Verfahren zum Betrieb einer Windenergieanlage oder eines Windparks sowie ein Computerprogramprodukt zu schaffen, bei der die Nachteile aus dem Stand der Technik nicht mehr oder nur noch im verminderten Umfang auftreten.

Gelöst wird diese Aufgabe durch einen Versorgungsstrang mit einer Schnellschalteinrichtung gemäß dem unabhängigen Anspruch 1 sowie eine Windenergieanlage, einen Windpark, ein Verfahren und ein Computerprogrammprodukt gemäß den entsprechenden Ansprüchen. Vorteilhafte Weiterbildungen sind Gegenstand der abhängigen Ansprüche.

Zunächst seien einige im Rahmen der Erfindung verwendete Begriffe erläutert:
Mit "Einspeisestrang" ist der Leistungskreis zwischen Generator und Netz bezeichnet. Der Einspeisestrang kann dabei verschiede Komponenten, wie bspw. Transformatoren oder Umrichter, umfassen, die für die Einspeisung der vom Generator erzeugten Energie in das Netz ggf. erforderlichen Umwandlungen in Spannung, Phase und Frequenz, ermöglichen.

Der "Versorgungsstrang" bezeichnet den Leistungskreis zwischen einem Anbindungspunkt, an dem Netzspannung oder transformierte Netzspannung herrscht, und den verschiedenen elektrisch betriebenen Komponenten der Windenergieanlage, wobei die verschiedenen, für die Anpassung der Spannung, Phase und Frequenz ggf. erforderlichen Komponenten, wie bspw. Transformatoren oder Eigenbedarfsregelung, umfasst sind. Auf der einen Seite ist der Versorgungsstrang an den Einspeisestrang oder an einem Netz angebunden; auf der anderen Seite sind die elektrisch betriebenen Komponenten der Windenergieanlage bspw. über eine Verteilerschiene angeschlossen.

Mit "Schaltzeit der Schnellschalteinrichtung" wird die Zeit bezeichnet, die zwischen dem tatsächlichen Auftreten einer Überspannung und der elektrischen Trennung der elektrisch betriebenen Komponenten von dem Einspeisestrang vergeht. Insbesondere umfasst die Schaltzeit der Schnellschalteinrichtung also die Zeit zur Detektion und regelungstechnischen Verarbeitung der Überspannung sowie die für den tatsächlichen Schaltvorgang erforderliche Zeit.

Indem erfindungsgemäß vorgesehen ist, dass die elektrisch betrieben Komponenten innerhalb sehr kurzer Zeit (weniger als 10 ms) im Falle einer Überspannung am Versorgungsstrang durch die Schnellschalteinrichtung von dem Einspeisestrang getrennt werden, kann sichergestellt werden, dass an den elektrisch betriebenen Komponenten selbst praktisch keine Überspannung auftritt. In der Folge können Beschädigungen an den elektrisch betriebenen Komponenten verhindert werden, ohne dass es dazu aufwendiger Einrichtungen oder einer ansonsten notwendigen Überdimensionierung bedarf. Die elektrisch betriebenen Komponenten sind im Falle einer festgestellten Überspannung am Versorgungsstrang zwar für die - meist kurze - Dauer einer Überspannung im Versorgungsstrang, die in der Regel einer Überspannung im Netz entspricht, spannungslos, dies ist jedoch in der Praxis kein Problem. Robuste elektrisch betriebenen Komponenten, wie bspw. Heizungen, überstehen kurze Phasen der Spannungslosigkeit ohne Weiteres. Andere, kritischere elektrisch betriebene Komponenten, wie z.B. Regelungseinrichtungen, verfügen in der Regel bereits aus anderen Gründen über Einrichtungen zur unterbrechungsfreien Stromversorgung (USV-Einrichtungen). Die entsprechenden Komponenten können also auch im Falle einer Trennung von der Spannungsversorgung durch die Schnellschalteinrichtung weiter betrieben werden, ohne jedoch für Überspannungen ausgelegt sein zu müssen.

Es ist bevorzugt, wenn die Schnellschalteinrichtung dazu ausgebildet ist, insbesondere im Falle einer elektrischen Trennung der elektrisch betriebenen Komponenten von dem Einspeisestrang eine Energieversorgungseinheit zur Versorgung der elektrisch betriebenen Komponenten der Windenergieanlage zuzuschalten. Indem die Schnellschalteinrichtung neben der elektrischen Trennung zum Schutz vor Überspannungen auch eine Energieversorgungseinheit zuschaltet, wird sichergestellt, dass die elektrisch betriebenen Komponenten praktisch unterbrechungsfrei mit Spannung versorgt werden können. Die Energieversorgungseinheit ist dabei vorzugsweise derart ausgebildet, dass sie die benötigte Spannung unmittelbar und insbesondere ohne Vorlaufzeit zur Verfügung stellen kann. Die Energieversorgungseinheit kann bspw. eine Batterie, einen Akkumulator oder einen Kondensator umfassen.

Die Windenergieanlage kann dabei derart ausgebildet sein, dass lediglich ein Teil der elektrisch betriebenen Komponenten über die Energieversorgungseinheit mit elektrischer Leistung versorgt wird. Insbesondere können solche Komponenten von der Versorgung über die zuschaltbare Energieversorgungseinheit ausgenommen sein, die ausreichend robust sind, die über eigenen Mittel zur Überbrückung von Spannungsabfällen verfügen oder die für den Betrieb der Windenergieanlage nicht zwingend erforderlich sind, weshalb ein kurzzeitiges Abschalten dieser Komponenten unkritisch ist. Eine entsprechende Ausgestaltung der Windenergieanlage ermöglicht es, die Energieversorgungseinheit kleiner auszulegen als wenn alle elektrisch betriebenen Komponenten von der Energieversorgungseinheit versorgt werden müssten.

Dabei kann die Energieversorgungseinheit unabhängig von ihrer räumlichen Anordnung eine eigenständige Einheit sein, die z. B. unabhängig von der Schnellschalteinrichtung gehandhabt werden kann. Sie kann aber auch einen funktionalen und/oder räumlichen Teil der Schnellschalteinrichtung bilden, also funktional und/oder räumlich in diese integriert sein.

Die Schnellschalteinrichtung umfasst vorzugsweise ein Schnellschaltelement und eine zur Steuerung des Schnellschaltelements ausgebildete Steuerungseinrichtung mit Überspannungserfassung. Das Schnellschaltelement umfasst vorzugsweise wenigstens einen schnell an- und abschaltbaren elektronischen Schalter, wie bspw. einen GTO-Thyristor, einen IGB-Transistor und/oder einen IGC-Thyristor. Die Zeit, die das Schnellschaltelement für die eigentliche Schaltfunktion benötigt (also die Zeit zwischen Eingang eines Ansteuerungssignals und dem letztendlichen Schalten), ist vorzugsweise kleiner gleich 1 ms. Die Zeit, die die Steuerungseinrichtung zur Überspannungserfassung und zur Bereitstellung eines entsprechenden Ansteuerungssignals benötigt, beträgt vorzugsweise 1 bis 5 ms, weiter vorzugsweise 1 bis 4 ms. Die Schaltzeit der Schnellschalteinrichtung ergibt sich aus der Summe der beiden vorgenannten Zeiten.

Sofern der Versorgungsstrang eine Eigenbedarfsregelungseinheit umfasst, ist die Schnellschalteinrichtung (in der vorstehend genannten bevorzugten Ausführungsform das Schnellschaltelement und die Überspannungserfassung der Steuerungseinrichtung der Schnellschalteinrichtung) vorzugsweise zwischen der Eigenbedarfsregelungseinheit und den elektrisch betriebenen Komponenten der Windenergieanlage angeordnet. Dies bietet den Vorteil, dass die Schnellschalteinrichtung nur dann aktiviert wird, wenn die Eigenbedarfsregelungseinheit Spannungsanstiege im Einspeisestrang nicht selbst ausregeln kann. Gleichzeitig ermöglicht eine entsprechende Anordnung, dass die Eigenbedarfsregelungseinheit bei Trennung der elektrisch betriebenen Komponenten durch die Schnellschalteinrichtung weiter betrieben werden kann und die Schnellschalteinrichtung die elektrisch betriebenen Komponenten wieder mit dem Einspeisestrang verbindet, sobald die Eigenbedarfsregelungseinheit den Spannungsanstieg ausgeregelt hat. Die Eigenbedarfsregelungseinheit muss in diesem Fall zwar für mögliche Überspannungen ausgelegt sein, die elektrisch betriebenen Komponenten bleiben durch die Schnellschalteinrichtung aber weiterhin vor Überspannungen geschützt.

Sofern der Versorgungsstrang eine Eigenbedarfsregelungseinheit umfasst, kann die Schnellschalteinrichtung auch in die Eigenbedarfsregelungseinheit integriert sein.

Es ist bevorzugt, wenn die Schnellschalteinrichtung wenigstens einen Filter zur Anpassung der Charakteristik der Überspannungserfassung aufweist. Ein entsprechender Filter kann dazu dienen, damit die Schnellschalteinrichtung nicht zu nervös reagiert, ggf. also zu frühzeitig die elektrisch betriebenen Komponenten trennt. Der wenigstens eine Filter kann dabei ein Tiefpassfilter, ein Filter mit laufender Mittelung und/oder ein Filter mit zeitversetzter Mittelung sein. Auch eine Kombination verschiedener Filter und/oder ein paralleles Vorsehen mehrerer Filter mit jeweils auf den Filter abgestimmten Spannungswerten, bei denen eine Trennung durch die Schnellschalteinrichtung gewünscht ist, ist möglich.

Bei einer Windenergieanlage ist der Versorgungsstrang vorzugsweise in dem Bereich des Einspeisestrangs angebunden, in dem Netzspannung oder transformierte Netzspannung herrscht. In anderen Worten soll der Versorgungsstrang in dem netzseitigen Bereich des Einspeisestrangs angebunden sein, in dem die Netzspannung nicht durch aktive Schaltelemente o.ä. modifiziert wird. Eine Veränderung der Netzspannung durch statische Elemente, wie bspw. Einspeisetransformatoren, ist hierdurch nicht ausgeschlossen. Durch eine entsprechende Anbindung des Versorgungsstrangs ist eine Versorgung der elektrisch betriebenen Komponenten auch dann noch gewährleistet, wenn keine Energie vom Generator in das Netz eingespeist wird.

Vorzugsweise liegt die Schaltzeit der Schnellschalteinrichtung zwischen 3 und 5 ms. Durch eine entsprechend kurze Schaltzeit kann in der Regel verhindert werden, dass sonstige Überspannungsschutzmechanismen an den elektrisch betriebenen Komponenten, wie bspw. Sicherungen oder sonstige Schaltschütze, ansprechen.

Der erfindungsgemäße Versorgungsstrang ist dazu ausgebildet, elektrisch betriebene Komponenten, bspw. Komponenten einer Windparks, mit elektrischer Energie aus einem Netz, bspw. dem windparkinternen Netz, zu versorgen, wobei ein Schutz der elektrisch betriebenen Komponenten vor Überspannungen im Netz gewährleistet wird. Zur Erläuterung des erfindungsgemäßen Versorgungsstrangs sowie bevorzugter Weiterbildungen wird auf die vorstehenden Ausführungen verwiesen.

Der erfindungsgemäße Windpark zeichnet sich dadurch aus, dass seine elektrisch betriebenen Komponenten, wie bspw. Parkregelungseinheiten, über einen erfindungsgemäßen Versorgungsstrang mit elektrischer Spannung versorgt werden und somit vor Überspannungen geschützt sind. Zur Erläuterung des erfindungsgemäßen Windparks wird auf die vorstehenden Ausführungen verwiesen. Aus diesen Ausführungen ergeben sich außerdem vorteilhafte Weiterbildungen des erfindungsgemäßen Windparks.

Zur Erläuterung des erfindungsgemäßen Verfahrens sowie des erfindungsgemäßen Computerprogrammproduktes wird auf die vorstehenden Ausführungen verwiesen. Aus den vorstehenden Ausführungen zu vorteilhaften Weiterbildungen von Windenergieanlage, Versorgungsstrang und Windpark ergeben sich analog auch vorteilhafte Weiterbildungen des erfindungsgemäßen Verfahrens bzw. Computerprogrammproduktes.

Die Erfindung wird nun anhand von Ausführungsbeispielen unter Bezugnahme auf die beigefügten Zeichnungen näher beschrieben. Es zeigen:
- Figur 1:: eine vereinfachte schematische Darstellung einer erfindungsgemäßen Windenergieanlage;
- Figur 2a,b:: schematische Detaildarstellungen von zwei Ausführungsvarianten der Schnellschalteinrichtung der Windenergieanlage aus Figur 1;
- Figur 3:: schematische Darstellung des Filters aus Figuren 2a,b;
- Figur 4a-c:: schematische Darstellungen der Schalter aus Figuren 2a,b;
- Figur 5:: eine vereinfachte schematische Darstellung eines erfindungsgemäßen Versorgungsstrangs; und
- Figur 6:: eine vereinfachte schematische Darstellung eines erfindungsgemäßen Windparks.

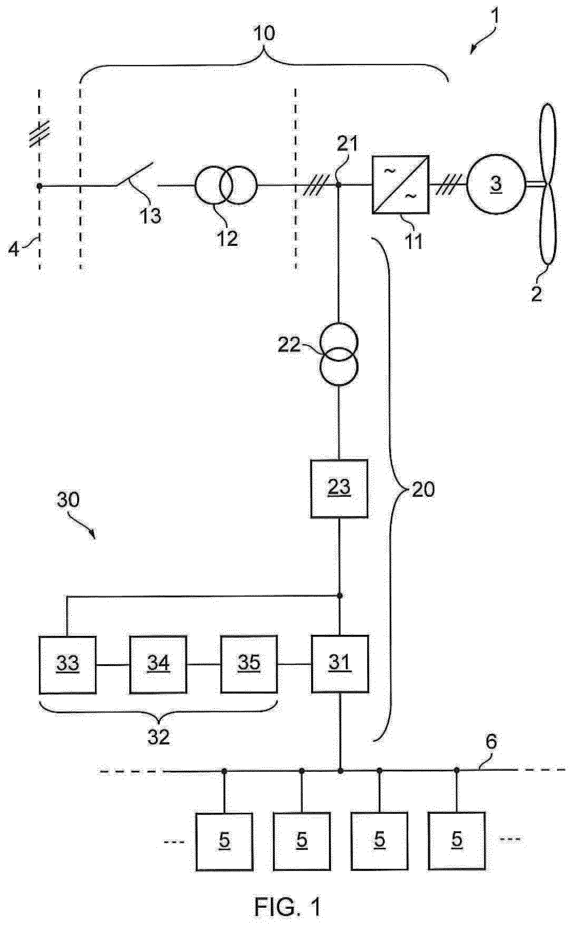

In Figur 1 ist ein vereinfachtes Schema einer erfindungsgemäßen Windenergieanlage dargestellt. Die Windenergieanlage 1 umfasst einen Rotor 2, der - ggf. über ein nicht dargestelltes Getriebe - einen Generator 3 antreibt, um so vom Wind induzierte mechanische Energie in elektrische Energie zu wandeln. Die vom Generator 3 stammende elektrische Energie wird über den Einspeisestrang 10 in das Netz 4 eingespeist. Bei dem Netz 4 kann es sich um ein Versorgungsnetz oder um ein Zwischennetz, bspw. ein windparkinternes Netz, von wo aus die elektrische Energie in ein Versorgungsnetz eingespeist wird, handeln.

Der Einspeisestrang 10 umfasst einen Umrichter 11, durch den die vom Generator stammende elektrische Energie hinsichtlich Phase und Frequenz in eine zur Einspeisung in das Netz 4 geeignete Form gewandelt wird. Der Transformator 12 dient zur Anpassung der Spannung. Über den Schalter 13 lässt sich die Windenergieanlage 1 vom Netz 4 trennen.

Die Windenergieanlage 1 umfasst weiterhin eine Mehrzahl von elektrisch betriebenen Komponenten 5, die für den ordnungsgemäßen Betrieb der Windenergieanlage 1 erforderlich sind. Diese Komponenten umfassen elektronische Steuerungskomponenten, Heizungen, Verstellungsantriebe, etc.

Zur Versorgung der elektrisch betriebenen Komponenten 5 ist ein Versorgungsstrang 20 vorgesehen. Der Versorgungsstrang 20 erstreckt sich zwischen dem Einspeisestrang 10 und einer Sammelschiene 6, an der wiederrum die elektrisch betriebenen Komponenten 5 angeschlossen sind.

Der Versorgungsstrang 20 ist in dem Bereich des Einspeisestrangs 10 angebunden, in dem eine transformierte Netzspannung herrscht. In anderen Worten sind zwischen dem Netz 4 und dem Anbindungspunkt 21 des Versorgungsstrangs 20 lediglich statische Elemente, wie der Transformator 12 vorgesehen, sodass sich Spannungsänderungen im Netz 4 unmittelbar in der Spannung am Anbindungspunkt 21 des Versorgungsstrangs 20 wiederspiegeln. Dies bietet den Vorteil, dass am Anbindungspunkt 21 bereits geringere Spannungen als im Netz 4 selbst vorliegen, gleichzeitig aber - da bspw. der Umrichter 11 umgangen wird - eine Versorgung der elektrisch betriebenen Komponenten 5 über den Versorgungsstrang 20 auch dann möglich ist, wenn der Generator 3 der Windenergieanlage 1 selbst keine elektrische Leistung liefert.

Ausgehend vom Anbindungspunkt 21 des Versorgungsstrangs 20 am Einspeisestrang 10 umfasst der Versorgungsstrang 20 einen Anpassungstransformator 22 und einen Eigenbedarfsregler 23. Der Eigenbedarfsregler 23 ist dazu ausgebildet, die Spannung für die elektrisch betriebenen Komponenten 5 zu regeln, sodass insbesondere bei Spannungsänderungen im Netz 4 an den elektrisch betriebenen Komponenten 5 bzw. an der Sammelschiene 6 eine vorgegebene Sollspannung eingehalten wird. Der Eigenbedarfsregler 23 kann hierzu bspw. mit Stufentransformatoren ausgestattet sein.

Allerdings weisen entsprechende, aus dem Stand der Technik grundsätzlich bekannte Eigenbedarfsregler 23 eine nicht unerhebliche Reaktionszeit auf Spannungsänderungen im Netz 4 auf (häufig 100 bis 200 ms), weshalb bei schnellen Spannungsanstiegen im Netz 4 am Ausgang des Eigenbedarfsreglers 23 wenigstens kurzzeitig eine Spannung deutlich oberhalb der vorgegebene Sollspannung für die elektrisch betriebenen Komponenten 5 bzw. die Sammelschiene 6 vorliegen kann.

Um zu verhindern, dass eine entsprechende Überspannung zu Beschädigung der elektrisch betriebenen Komponenten 5 führt, ist erfindungsgemäß eine Schnellschalteinrichtung 30 vorgesehen, mit der die elektrisch betriebenen Komponenten 5 bzw. die Sammelschiene 6, an der die Komponenten 5 angeschlossen sind, bei einer Überspannung am Versorgungsstrang 20 in dem Bereich zwischen Eigenbedarfsregler 23 und Sammelschiene 6 von dem Einspeisestrang 10 trennt, sodass eine Überspannung am Ausgang des Eigenbedarfsreglers 23 nicht auf die elektrisch betriebenen Komponenten 5 durchschlägt. Um dies sicherzustellen weist die Schnellschalteinrichtung 30 eine Schaltzeit von weniger als 10 ms auf. Die Schaltzeit der Schnellschalteinrichtung 30 liegt somit deutlich unterhalb der Reaktionszeit von üblichen Überspannungsschutzelementen, wie bspw. Sicherungen oder Schaltschützen.

Die Schnellschalteinrichtung 30 umfasst ein Schnellschaltelement 31, mit dem die eigentliche Trennung der elektrisch betriebenen Komponenten 5 vom Netz 4 bewerkstelligt werden kann, sowie eine Steuerungseinrichtung 32 mit Überspannungserfassung. Die Steuerungseinrichtung 32 umfasst ein Spannungserfassungsmodul 33, ein Filter 34 und ein Steuerungsmodul 35.

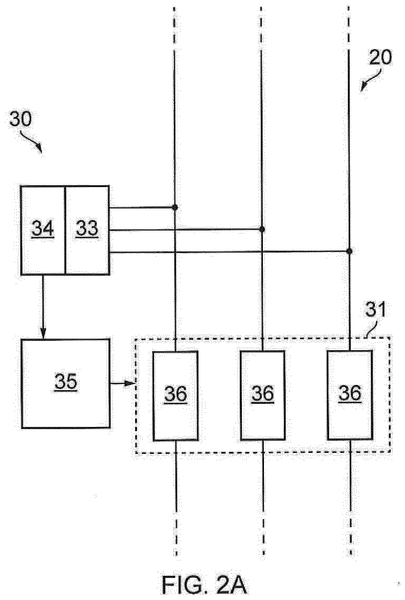

In Figur 2a ist eine erste Ausführungsvariante der Schnellschalteinrichtung 30 aus Figur 1 näher dargestellt. Die Spannungen im Versorgungsstrang 20 werden durch das Spannungserfassungsmodul 33 kontinuierlich aufgenommen und an einen Filter 34 weitergeleitet. Der Filter 34 dient dazu die Schaltcharakteristik der Schnellschalteinrichtung 30 zu beeinflussen. Insbesondere kann durch den Filter 34 erreicht werden, dass die Schnellschalteinrichtung 30 im Falle einer Überspannung zwar eine schnelle Trennung der elektrisch betriebenen Komponenten 5 vom Netz 4 ermöglicht, gleichzeitig aber auch nicht zu nervös auf Spannungsanstiege reagiert. Letzteres hilft zu verhindern, dass die elektrisch betriebenen Komponenten 5 auch in solchen Fällen vom Netz 4 getrennt werden, in den eine Trennung vom Netz 4 nicht zwingend geboten ist. Der Filter 34 kann Tiefpassfilter, Filter mit laufender Mittelung und/oder Filter mit zeitversetzter Mittelung umfassen. Insbesondere kann der Filter 34 eine Umrechnung der gemessenen Spannungen in den einzelnen Phasen in einen Spannungszeiger in Polarkoordinaten umfassen, wobei die Filterung der Spannungen dann auf Basis des Betrags des Spannungszeigers erfolgt.

Die gefilterten Spannungen werden an das Steuerungsmodul 35 übermittelt und dort mit den Spannungssollwerten und/oder den zulässigen Spannungen verglichen. Wird eine Überspannung festgestellt, steuert das Steuerungsmodul 35 das Schnellschaltelement 31 so an, dass die elektrisch betriebenen Komponenten 5 bzw. die Sammelschiene 6 vom Netz 4 getrennt werden. Dazu weist das Schnellschaltelement 31 elektrisch ansteuerbare Schalter 36 auf, mit denen die einzelnen Leitungen im Versorgungsstrang 20 unterbrochen werden können.

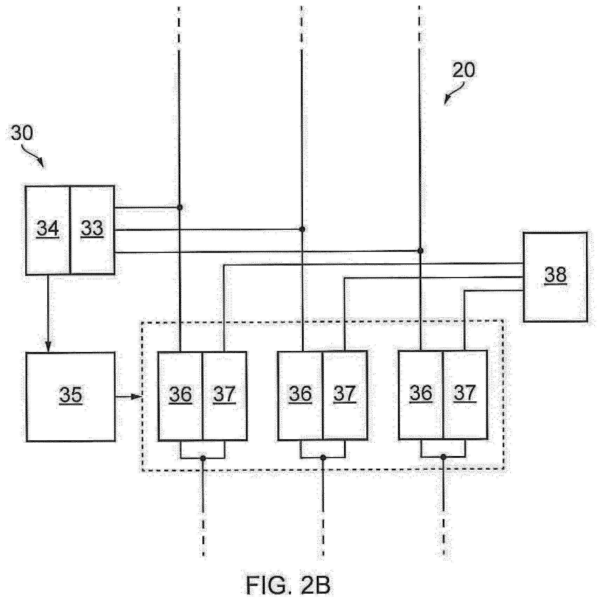

In Figur 2b ist eine alternative Ausführungsvariante der Schnellschalteinrichtung 30 aus Figur 1 dargestellt, bei der im Vergleich zur Ausführungsvariante aus Figur 2a das Schnellschaltelement 31 nicht nur Schalter 36 zur Trennung der elektrisch betriebenen Komponenten 5 bzw. der Sammelschiene 6 vom Netz 4 aufweist, sondern auch noch elektrische Schalter 37, mit denen die elektrisch betriebenen Komponenten 5 bzw. die Sammelschiene 6 mit einer Energieversorgungseinheit 38 verbunden werden können. Wird durch die Schnellschalteinrichtung 30 eine Überspannung festgestellt, können die elektrisch betriebenen Komponenten 5 über die Schalter 36 vom Netz 4 getrennt, gleichzeitig aber über die Schalter 37 mit der Energieversorgungseinheit 38 verbunden werden. Die elektrisch betriebenen Komponenten 5 erhalten so eine unterbrechungsfreie Spannungsversorgung, ohne dass Gefahr von Überspannung bestünde und ohne dass die elektrisch betriebenen Komponenten 5 selbst mit Überspannungsschutz und/oder unterbrechungsfreier Spannungsversorgung ausgestattet werden müssten. Bei der Energieversorgungseinheit 38 handelt es sich vorzugsweise um ein Gerät mit aufladbarer Batterie oder mit einem Speicherkondensator, die insbesondere in Fällen von Normalspannung im Netz 4 aufgeladen werden können.

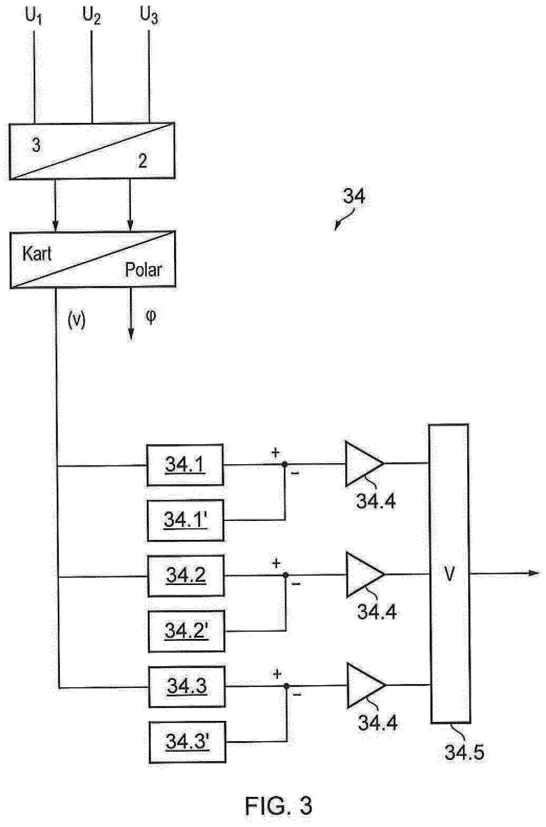

In Figur 3 ist ein Beispiel für den Aufbau eines Filters 34, wie er bei den Schnellschalteinrichtungen 30 gemäß Figuren 1, 2a, b verwendet werden kann, dargestellt. Die von dem Spannungserfassungsmodul 33 ermittelten Spannungen U₁, U₂, U₃ der drei Phasen werden zunächst in zwei Phasen und anschließend von kartesischen in Polarkoordinaten umgerechnet. Der Betrag des Spannungszeigers |U| wird drei parallel geschalteten Filterelementen 34.1, 34.2, 34.3 zugeleitet. Bei dem Filterelement 34.1 handelt es sich um einen Tiefpassfilter mit Zeitkonstante 2,5 ms. Filterelement 34.2 ist ein Filter mit laufender Mittelung über 10 ms, während Filterelement 34.3 ein Filter mit um 5 ms zeitversetzter Mittelung ist. Anschließend werden für die gefilterten Werte jeweils die Differenz zu einem filterabhängigen Spannungsmaximalwert 34.1', 34.2', 34.3' berechnet und über Vergleicher 34.4 derart normiert, dass bei einem gefilterten Wert über dem jeweiligen Spannungsmaximalwert 34.1', 34.2', 34.3' eine logische Eins, ansonsten eine logische Null dem abschließenden Oder-Gatter 34.5 zugeleitet wird. Der Ausgang des Oder-Gatters 34.5 nimmt dann eine logische Eins an, wenn bei einem der Filterelemente 34.1, 34.2, 34.3 eine Überspannung festgestellt wird, ansonsten ist er logisch Null. Der Ausgang des Oder-Gatters 34.5 wird dann dem Steuerungsmodul 35 zugeleitet (vgl. Figuren 1, 2a, b) und dort zu Steuerungsimpulsen für die Schalter 36, 37 verarbeitet.

Durch das Vorsehen unterschiedlicher Filterelemente 34.1, 34.2, 34.3 kann sichergestellt werden, dass die Schalteinrichtung 30 auf unterschiedliche Arten der Überspannung angemessen reagieren kann. Abweichend von dem in Figur 3 gezeigten Beispiel des Filters 34 kann aber auch eine beliebige andere Anzahl an Filterelementen 34.1, 34.2, 34.3 für den Filter 34 vorgesehen sein. Sofern nur ein Filterelement vorgesehen ist, kann das Oder-Gatter 34.5 entfallen.

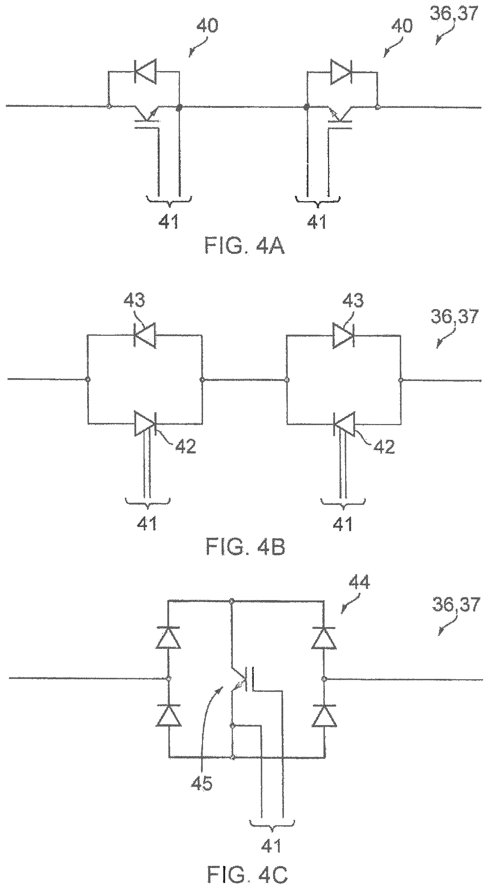

In Figur 4 sind verschiedene mögliche Ausgestaltungen der Schalter 36, 37 gezeigt. In Figur 3a ist ein Schalter 36, 37 auf Basis von 2 IGBT-Modulen 40 gezeigt, die sich über die Ansteuerungsleitungen 41 schalten lassen. In Figur 3b ist ein Schalter 36, 37 mit 2 GTOs 42 und 2 Dioden 43. Anstelle der GTOs 42 können auch IGCTs verwendet werden. In Figur 3c ist ein Schalter 36, 37 auf Basis eines Brückengleichrichters 44 mit einem IGBT 45 dargestellt. Anstelle des IGBT 45 kann auch ein GTO oder ein IGCT zum Einsatz kommen.

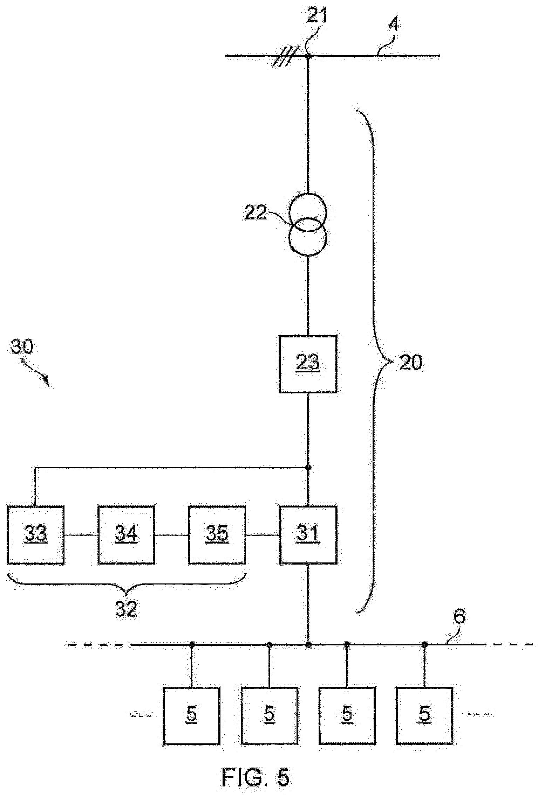

In Figur 5 ist ein erfindungsgemäßer Versorgungstrang 20 dargestellt. Der Versorgungsstrang 20 entspricht dabei im Wesentlichen dem Versorgungsstrang 20 der Windenergieanlage 1 gemäß Figur 1, wobei der Versorgungsstrang 20 jedoch an seinem Anbindungspunkt 21 nicht an einem Einspeisestrang 10 einer Windenergieanlage 1 sondern vielmehr unmittelbar an ein Netz 4 angebunden ist. Zur weiteren Erläuterung des Versorgungsstrangs 20 wird auf die Ausführungen zu Figuren 1 bis 3 verwiesen.

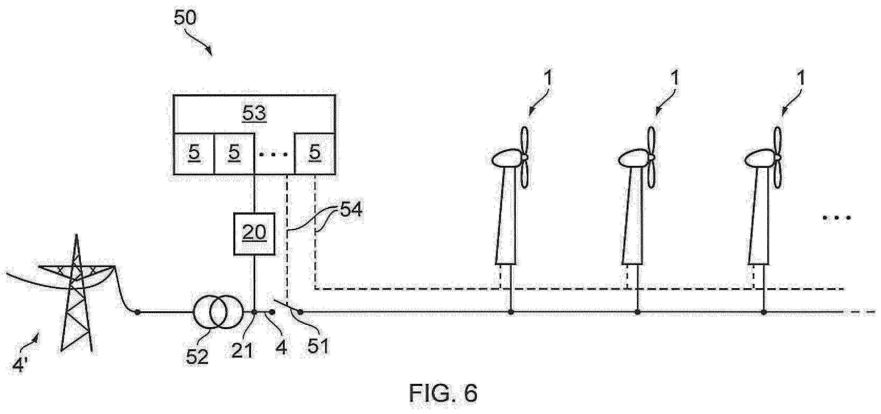

In Figur 6 ist ein erfindungsgemäßer Windpark 50 dargestellt. Der Windpark 50 umfasst mehrere Windenergieanlagen 1, die an das windparkinterne Netz 4 angeschlossen sind. Über ein Schaltelement 51 und einen Transformator ist das windparkinterne Netz 4 an ein Versorgungsnetz 4' angeschlossen.

Zur Steuerung des Windparks 50 ist ein Parkmaster 53 vorgesehen, der verschiedene elektrisch betriebene Komponenten 5 zur Erfassung und Verarbeitung von Messwerten und Steuersignalen umfasst. Über Steuerleitungen 54 kann der Parkmaster 53 Signale an die Windenergieanlagen 1 und das Schaltelement 51 übermitteln.

Zur Spannungsversorgung der elektrisch betriebenen Komponenten 5 des Parkmasters 53 ist ein Versorgungsstrang 20 vorgesehen. Der Versorgungsstrang 20 ist gemäß Figur 5 ausgestaltet. Zur Erläuterung des Aufbaus und der Funktionsweise dieses Versorgungsstrangs 20 wird auf Figur 5 und die dazugehörigen Ausführungen verwiesen.

## Patentansprüche

1. Versorgungsstrang (20), der an einem Netz (4) angebunden und zur Spannungsversorgung elektrisch betriebener Komponenten (5) mit Wechselspannung ausgebildet ist,
**dadurch gekennzeichnet, dass**
der Versorgungsstrang (20) eine Schnellschalteinrichtung (30) zur elektrischen Trennung der elektrisch betriebenen Komponenten von dem Netz (4) bei einer Überspannung im Versorgungsstrang (20) umfasst, wobei die Schnellschalteinrichtung (30) ein Schnellschaltelement (31) umfassend einen an- und abschaltbaren elektronischen Schalter und eine zur Steuerung des Schnellschaltelements (31) ausgebildete Steuerungseinrichtung (32) mit Überspannungserfassung umfasst, wobei die Schaltzeit der Schnellschalteinrichtung (30), die zwischen dem tatsächlichen Auftreten einer Überspannung und der elektrischen Trennung der elektrisch betriebenen Komponenten (5) von dem Netz (4) vergeht, weniger als 10 ms beträgt, wobei die Schnellschalteinrichtung (30) wenigstens einen Filter (34) zur Anpassung der Charakteristik der Überspannungserfassung durch Beeinflussung der Schaltcharakteristik der Schnellschalteinrichtung (30) aufweist, wobei der Eingangswert des Filters (34) der Betrag des kombinierten Spannungszeigers |U| der Phasen des Netzes (4) ist.

2. Versorgungsstrang nach Anspruch 1,
**dadurch gekennzeichnet, dass**
die Schnellschalteinrichtung (30) dazu ausgebildet ist, eine Energieversorgungseinheit (38) zur Versorgung der elektrisch betriebenen Komponenten (5) zuzuschalten.

3. Versorgungsstrang nach Anspruch 2,
**dadurch gekennzeichnet, dass**
lediglich ein Teil der elektrisch betriebenen Komponenten (5) über die Energieversorgungseinheit (38) mit elektrischer Leistung versorgt wird.

4. Versorgungsstrang nach einem der vorhergehenden Ansprüche,
**dadurch gekennzeichnet, dass**
das Schnellschaltelement (31) eine zur Steuerung des an- und abschaltbaren elektronischen Schalters (31) ausgebildete Steuerungseinrichtung (32) mit Überspannungserfassung umfasst.

5. Versorgungsstrang einem der vorhergehenden Ansprüche,
**dadurch gekennzeichnet, dass**
der Versorgungsstrang (20) eine Eigenbedarfsregelungseinheit (23) umfasst, wobei die Schnellschalteinrichtung (30) vorzugsweise zwischen der Eigenbedarfsregelungseinheit (23) und den elektrisch betriebenen Komponenten (5) angeordnet sind.

6. Versorgungsstrang nach Anspruch 1,
**dadurch gekennzeichnet, dass**
der wenigstens eine Filter (34) ein Tiefpassfilter, ein Filter mit laufender Mittelung und/oder ein Filter mit zeitversetzter Mittelung ist.

7. Versorgungsstrang nach einem der vorhergehenden Ansprüche,
**dadurch gekennzeichnet, dass**
die Schaltzeit der Schnellschalteinrichtung (30) zwischen 3 und 5 ms liegt.

8. Windenergieanlage (1) mit elektrisch betriebenen Komponenten (5), umfassend
- einen durch einen Rotor (2) antreibbaren Generator (3) zur Erzeugung elektrischer Energie,
- einen Einspeisestrang (10) zur Einspeisung vom Generator (3) erzeugter elektrischer Energie in ein Netz (4) und
- einen Versorgungsstrang (20), der an den Einspeisestrang (10) angebunden und zur Spannungsversorgung elektrisch betriebener Komponenten (5) der Windenergieanlage (1) ausgebildet ist,
**dadurch gekennzeichnet, dass**
der Versorgungsstrang (20) nach einem der vorhergehenden Ansprüche ausgebildet ist.

9. Windenergieanlage nach Anspruch 8,
**dadurch gekennzeichnet, dass**
der Versorgungsstrang (20) in dem Bereich des Einspeisestrangs (10) angebunden ist, in dem Netzspannung oder transformierte Netzspannung herrscht.

10. Windpark (50) mit wenigstens zwei Windenergieanlagen (1) umfassend elektrisch betriebene Komponenten,
**dadurch gekennzeichnet, dass**
die elektrisch betriebenen Komponenten (5) des Windparks (50) über einen Versorgungsstrang (20) gemäß einem der Ansprüche 1 bis 7mit einem Netz (4) verbunden sind.

11. Windpark nach Anspruch 10,
**dadurch gekennzeichnet, dass**
das Netz (4) ein windparkinternes Netz oder ein Versorgungsnetz ist.

12. Verfahren zum Betreiben einer Windenergieanlage (1) oder eines Windparks (50) mit elektrisch betriebenen Komponenten (5), die über einen Versorgungsstrang (20) von einem Einspeisestrang (10) oder einem Netz (4) mit elektrischer Wechselspannung versorgt werden, umfassend die Schritte:
- Überwachen der Spannung in dem Versorgungsstrang (20) auf Überspannungen, wobei ein Filter (34) zur Anpassung der Charakteristik der Überspannungserfassung durch Beeinflussung der Schaltcharakteristik verwendet wird, dessen Eingangswert der Betrag des kombinierten Spannungszeigers |U| der Phasen des Netzes (4) ist; und
- Trennen der elektrisch betriebenen Komponenten (5) von dem Einspeisestrang (10) oder den Netz (4) innerhalb von 10 ms nach Auftreten einer Überspannung mit Hilfe einer Schnellschalteinrichtung (30) umfassend ein Schnellschaltelement (31), das seinerseits einen an- und abschaltbaren elektronischen Schalter umfasst.

13. Verfahren nach Anspruch 12,
**dadurch gekennzeichnet, dass**
bei der Überwachung der Spannung in dem Versorgungsstrang (20) auf Überspannungen ein Filter (34) zur Anpassung der Charakteristik der Überspannungserfassung verwendet wird, wobei der Filter (34) vorzugsweise ein Tiefpassfilter, ein Filter mit laufender Mittelung und/oder ein Filter mit zeitversetzter Mittelung ist.

14. Computerprogrammprodukt umfassend Programmteile, welche, wenn geladen in einem Computer, zur Durchführung eines Verfahrens nach Anspruch 12 oder 13 ausgelegt sind.

## Claims

1. Supply branch (20) interfaced with a grid (4) and designed to supply electrically operated components (5) with AC voltage,
**characterized in that**
the supply branch (20) comprises a quick-break device (30) for electrically isolating the electrically operated components from the grid (4) in the event of an overvoltage in the supply branch (20), wherein the quick-break device (30) comprises an instantaneous element (31) comprising an electronic switch that can be switched on and off and a control device (32), designed to control the instantaneous element (31), with overvoltage detection, wherein the switching time of the fast-break device (30) that elapses between the actual occurrence of an overvoltage and the electrical isolation of the electrically operated components (5) from the grid (4) is less than 10 ms, wherein the fast-break device (30) has at least one filter (34) for adapting the characteristic of the overvoltage detection by influencing the switching characteristic of the fast-break device (30), wherein the input value of the filter (34) is the absolute value of the combined voltage vector |U| of the phases of the grid (4).

2. Supply branch according to Claim 1,
**characterized in that**
the fast-break device (30) is designed to connect a power supply unit (38) for supplying power to the electrically operated components (5).

3. Supply branch according to Claim 2,
**characterized in that**
only some of the electrically operated components (5) are supplied with electrical power via the power supply unit (38) .

4. Supply branch according to one of the preceding claims,
**characterized in that**
the instantaneous element (31) comprises a control device (32), designed to control the electronic switch (31) that can be switched on and off, with overvoltage detection.

5. Supply branch according to one of the preceding claims,
**characterized in that**
the supply branch (20) comprises an internal-consumption control unit (23), wherein the fast-break device (30) is preferably arranged between the internal-consumption control unit (23) and the electrically operated components (5).

6. Supply branch according to Claim 1,
**characterized in that**
the at least one filter (34) is a low-pass filter, a filter with running averaging and/or a filter with time-offset averaging.

7. Supply branch according to one of the preceding claims,
**characterized in that**
the switching time of the fast-break device (30) is between 3 and 5 ms.

8. Wind turbine (1) having electrically operated components (5), comprising
- a generator (3), driveable by a rotor (2), for generating electrical energy,
- a feed branch (10) for feeding electrical energy generated by the generator (3) into a grid (4), and
- a supply branch (20), which is interfaced with the feed branch (10) and designed to supply power to electrically operated components (5) of the wind turbine (1),
**characterized in that**
the supply branch (20) is designed according to one of the preceding claims.

9. Wind turbine according to Claim 8,
**characterized in that**
the supply branch (20) is interfaced in the region of the feed branch (10) in which system voltage or transformed system voltage prevails.

10. Wind farm (50) having at least two wind turbines (1) comprising electrically operated components,
**characterized in that**
the electrically operated components (5) of the wind farm (50) are connected to a grid (4) via a supply branch (20) according to one of Claims 1 to 7.

11. Wind farm according to Claim 10,
**characterized in that**
the grid (4) is a wind-farm-internal grid or a supply grid.

12. Method for operating a wind turbine (1) or a wind farm (50) having electrically operated components (5) that are supplied with AC voltage by a feed branch (10) or a grid (4) via a supply branch (20), comprising the steps of:
- monitoring the voltage in the supply branch (20) for overvoltages, wherein a filter (34) for adapting the characteristic of the overvoltage detection by influencing the switching characteristic is used, the input value of which filter is the absolute value of the combined voltage vector |U| of the phases of the grid (4); and
- isolating the electrically operated components (5) from the feed branch (10) or the grid (4) within 10 ms of the occurrence of an overvoltage with the aid of a fast-break device (30) comprising an instantaneous element (31) that for its part comprises an electronic switch that can be switched on and off.

13. Method according to Claim 12,
**characterized in that**
monitoring the voltage in the supply branch (20) for overvoltages involves a filter (34) for adapting the characteristic of the overvoltage detection being used, wherein the filter (34) is preferably a low-pass filter, a filter with running averaging and/or a filter with time-offset averaging.

14. Computer program product comprising program parts that, when loaded on a computer, are designed to perform a method according to Claim 12 or 13.

## Revendications

1. Branche d'alimentation (20), qui est raccordée à un réseau (4) et configurée pour l'alimentation électrique avec une tension alternative de composants (5) fonctionnant à l'électricité,
**caractérisée en ce que**
la branche d'alimentation (20) comporte un dispositif de commutation rapide (30) destiné à séparer électriquement les composants fonctionnant à l'électricité du réseau (4) dans le cas d'une surtension dans la branche d'alimentation (20), le dispositif de commutation rapide (30) comportant un élément de commutation rapide (31) comprenant un commutateur électronique qui peut être connecté et déconnecté ainsi qu'un dispositif de commande (32) avec détection de surtension configuré pour commander l'élément de commutation rapide (31), le temps de commutation du dispositif de commutation rapide (30), qui s'écoule entre la survenance effective d'une surtension et la séparation électrique des composants (5) fonctionnant à l'électricité du réseau (4), étant inférieur à 10 ms, le dispositif de commutation rapide (30) possédant au moins un filtre (34) destiné à adapter la caractéristique de la détection de surtension en influençant la caractéristique de commutation du dispositif de commutation rapide (30), la valeur d'entrée du filtre (34) étant la valeur absolue du vecteur de tension combiné |U| des phases du réseau (4).

2. Branche d'alimentation selon la revendication 1, **caractérisée en ce que** le dispositif de commutation rapide (30) est configuré pour mettre en circuit une unité d'alimentation en énergie (38) servant à alimenter les composants (5) fonctionnant à l'électricité.

3. Branche d'alimentation selon la revendication 2, **caractérisée en ce que** seule une partie des composants (5) fonctionnant à l'électricité est alimentée en puissance électrique par le biais de l'unité d'alimentation en énergie (38).

4. Branche d'alimentation selon l'une des revendications précédentes, **caractérisée en ce que** l'élément de commutation rapide (31) comporte un dispositif de commande (32) avec détection de surtension destiné à commander le commutateur électronique qui peut être connecté et déconnecté.

5. Branche d'alimentation selon l'une des revendications précédentes, **caractérisée en ce que** la branche d'alimentation (20) comporte une unité de régulation de la consommation propre (23), le dispositif de commutation rapide (30) étant de préférence disposé entre l'unité de régulation de la consommation propre (23) et les composants (5) fonctionnant à l'électricité.

6. Branche d'alimentation selon la revendication 1, **caractérisée en ce que** l'au moins un filtre (34) est un filtre passe-bas, un filtre à calcul de moyenne continue et/ou un filtre à calcul de moyenne décalée dans le temps.

7. Branche d'alimentation selon l'une des revendications précédentes,
**caractérisée en ce que**
le temps de commutation du dispositif de commutation rapide (30) est compris entre 3 et 5 ms.

8. Aérogénérateur (1) comprenant des composants (5) fonctionnant à l'électricité, comportant
- un générateur (3) entraîné par un rotor (2) destiné à générer de l'énergie électrique,
- une branche d'injection (10) destinée à injecter l'énergie électrique générée par le générateur (3) dans un réseau (4) et
- une branche d'alimentation (20), qui est raccordée à la branche d'injection (10) et qui est configurée pour l'alimentation électrique des composants (5) fonctionnant à l'électricité de l'aérogénérateur (1),
**caractérisé en ce que**
la branche d'alimentation (20) est configurée selon l'une des revendications précédentes.

9. Aérogénérateur selon la revendication 8,
**caractérisé en ce que**
la branche d'alimentation (20) est raccordée dans la zone de la branche d'injection (10) dans laquelle domine la tension de réseau ou la tension de réseau transformée.

10. Parc éolien (50) comprenant au moins deux aérogénérateurs (1) comportant des composants fonctionnant à l'électricité,
**caractérisé en ce que**
les composants (5) fonctionnant à l'électricité du parc éolien (50) sont reliés à un réseau (4) par le biais d'une branche d'alimentation (20) selon l'une des revendications 1 à 7.

11. Parc éolien selon la revendication 10,
**caractérisé en ce que**
le réseau (4) est un réseau externe au parc éolien ou un réseau d'alimentation.

12. Procédé pour faire fonctionner un aérogénérateur (1) ou un parc éolien (50) comprenant des composants (5) fonctionnant à l'électricité qui sont alimentés avec une tension électrique alternative par le biais d'une branche d'alimentation (20) depuis une branche d'injection (10) ou un réseau (4), comprenant les étapes suivantes :
- surveillance de la tension dans la branche d'alimentation (20) en vue de détecter d'éventuelles surtensions, un filtre (34) destiné à adapter la caractéristique de détection en influençant la caractéristique de commutation étant utilisé, dont la valeur d'entrée est la valeur absolue du vecteur de tension combiné |U| des phases du réseau (4) ; et
- séparation des composants (5) fonctionnant à l'électricité de la branche d'injection (10) ou du réseau (4) dans un délai de 10 ms après la survenance d'une surtension à l'aide d'un dispositif de commutation rapide (30) comprenant un élément de commutation rapide (31) qui, de son côté, comporte un commutateur électronique qui peut être connecté et déconnecté.

13. Procédé selon la revendication 12,
**caractérisé en ce que**
un filtre (34) destiné à adapter la caractéristique de détection de la surtension est utilisé lors de la surveillance de la tension dans la branche d'alimentation (20) en vue de détecter d'éventuelles surtensions, le filtre (34) étant de préférence un filtre passe-bas, un filtre à calcul de moyenne continue et/ou un filtre à calcul de moyenne décalée dans le temps.

14. Produit de programme informatique comprenant des parties de programme qui, lorsqu'elles sont chargées dans un ordinateur, sont conçues pour mettre en œuvre un procédé selon la revendication 12 ou 13.
